# EUROPEAN PATENT SPECIFICATION

(11) **EP 2 222 176 B1**
(45) Date of publication and mention of the grant of the patent: **06.04.2016**
(21) Application number: 08855302.9
(22) Date of filing: 26.11.2008
(51) Int. Cl.: A23C 11/02, A23C 11/04, A23C 11/08, A23L 29/10, A23L 29/262

(54) **SHELF STABLE LIQUID WHITENER AND PROCESS OF MAKING THEREOF**
HALTBARES FLÜSSIGES WEISSMITTEL UND VERFAHREN ZU SEINER HERSTELLUNG
AGENT BLANCHISSANT LIQUIDE À LONGUE DURÉE DE CONSERVATION ET SON PROCÉDÉ DE FABRICATION

(30) Priority: 29.11.2007 US 947490
(43) Date of publication of application: 01.09.2010
(73) Proprietor: Nestec S.A., 1800 Vevey (CH)
(72) Inventor: SHER, Alexander A., Dublin OH 43017 (US); OCTAVIA, Winnie, Delaware Ohio 43015 (US); MICHEL, Leticia Maria, Fishers Indiana 46038 (US); TUOT, James, Dublin OH 43017 (US)
(74) Representative: Elleby, Gudrun
(86) International application number: PCT/EP2008/066184
(87) International publication number: WO 2009/068543

(56) References cited:
- US-A- 3 935 325
- US-A- 4 857 341
- US-A- 5 024 849
- US-A1- 2005 276 898

## Description

### FIELD OF INVENTION

The present invention relates to a liquid whitening composition for use in foodstuffs. More particularly, the embodiments of the invention relate to an aseptically packaged, shelf-stable, non-dairy, liquid coffee whitener, and the process of making same.

### BACKGROUND OF THE INVENTION

Coffee whiteners can be in liquid or powder forms. Powdered forms tend to be less able to simulate the qualities of traditional dairy creamers, such as color, body and texture, and often fail to achieve complete dissolution.

Liquid whiteners are used widely in homes, offices, restaurants, workplaces, and other establishments to whiten and flavor beverages such as coffee and tea, and the market for non-dairy creamers that provide a whitening quality is rapidly growing. The United States is the market leader for this type of product.

Unfortunately, liquid dairy creamers tend to deteriorate rapidly, even when stored at refrigeration temperatures. One possible solution is to use a non-dairy whitener, but this introduces new challenges of creating a product that mimics the feeling of dairy, while offering the desired stability. Specific stability concerns include the ability to maintain a homogeneous product without separation or sedimentation of components during storage at room temperature and elevated temperatures for several months.

Current consumer trends demonstrate increased consumption of reduced-fat and fat-free products, including dairy products such as creamers. Fat present in creamers typically takes the form of trans-fatty acids, which, in accordance with health guidelines, consumers are reducing or eliminating consumption. However, fat provides a whitening quality, and the removal thereof requires an increase in whitening capability of the creamer. This can be achieved by the addition or more of a whitening component, but it is difficult to maintain the whitening component in suspension. Therefore, it is difficult to provide full-fat, low-fat and fat-free whiteners, without diminishing their whitening capacity as compared to conventional products, and further without compromising stability. Fat also provides flavor and body, so it is a further challenge to prepare a fat-free or reduced-fat whitener that maintains the same satisfaction as a full-fat product.

A desired whitener should be stable physically during storage and retain a constant viscosity over time. When added to coffee or similar beverages, the product should provide a good whitening capacity, dissolve rapidly and remain stable in a hot acidic environment with no feathering and/or sedimentation.

US Patent No. 3,935,325 describes a freeze-thaw stable coffee whitener. The disclosed coffee whitener is made with water, vegetable fat, vegetable protein, carbohydrates, buffering salt, emulsifiers and other ingredients. Such whiteners are inconvenient due to the need to thaw the product prior to use, and are high in cost due to handling and storage requirements.

European Patent Application No. 0 457 002 describes a liquid coffee whitener composed of fat or oil, water, carbohydrate and an amount of a protein hydrolysate effective to provide a stable emulsion. However, this coffee whitener is not shelf-stable.

U.S. Patent No. 4,748,028 discloses an aseptic fluid coffee whitener and process for preparing the same. The process includes ultra-high temperature (UHT) sterilization of a mixture of water, vegetable fat, emulsifiers, a milk protein, salt and other ingredients, cooling, homogenizing and cooling the mixture, and filling the resulting liquid in an aseptic container under aseptic conditions. The main disadvantage of the coffee whiteners disclosed by the patent is the high level of fat in the creamer, and the insufficient whitening power of the reduced-fat version of the creamer.

Thus, there is a need for a liquid shelf-stable whitener, especially full-fat, fat-free and low-fat, which has a high whitening capacity, good physical and chemical stability throughout the duration of its shelf-life, without creaming, sedimentation, or altered flavor. The whitener must also have suitable viscosity and pleasant mouth-feel, without feathering and fat separation when added to coffee.

The present invention provides a whitener having the qualities set forth above, and therefore satisfies a need in the art.

### SUMMARY OF THE INVENTION

The present invention relates to a shelf-stable, liquid whitening composition (also referred to herein as a beverage whitener) that includes a whitening agent and a stabilizing system to maintain the liquid whitening composition in a homogenous state in the composition for at least about 9 months at ambient temperatures. The stabilizing system includes a gum component, preferably of a mixture of two different gums, present in an amount sufficient to suspend the whitening agent in the liquid whitening composition, an emulsifying component in an amount sufficient to provide a stabilized emulsion of the whitening composition, and a cellulose component, preferably a blend of two different cellulose compounds, and more preferably a blend of microcrystalline cellulose (MCC) and carboxymethylcellulose (CMC), present in an amount sufficient to stabilize the whitening agent in suspension. The gum component, emulsifying component, and cellulose component also help provide and maintain emulsion stability and other desired properties of the liquid whitening composition in an aqueous media to which the liquid whitening composition is added.

In one embodiment of the invention, the whitening agent is titanium dioxide. Titanium dioxide can be present in an amount of about 0.05 to about 1 percent by weight of the composition, and can have a particle size of about 0.1 to about 0.7 microns.

It was surprisingly found that addition of a combination of MCC and CMC resulted in significant improvement of titanium dioxide suspension stability. In one embodiment, the MCC/CMC blend has a weight ratio of MCC to CMC of about 3:1 to about 30:1. This gum component is present in an amount of about 0.1 to about 1 percent by weight of the composition.

Advantageously and unexpectedly, the MCC and CMC system provides additional improved enhancements and functionality in certain combinations with the gum component. While combinations of different gum components may be used, it is preferred to use a mixture of kappa and iota carrageenan. The combination of kappa- and iota-carrageenan of the gum component in the disclosed concentrations and ratios along with the combination of MCC and CMC in the disclosed concentrations and ratios resulted in the best stability of the titanium dioxide suspension. Mixtures of kappa, lambda and iota-carrageenan may also be used. In comparison, if only carrageenans or their combinations were added to the whitener to achieve the desired product viscosity, no improvement in suspension stability was observed. Further, if only one type of carrageenan, kappa or iota, was added to the whitener with to obtain the desired product viscosity, no improvement in suspension stability was observed. Thus, the invention requires the combination of two different gums in the gum component and two different cellulose compounds in the cellulose component for best performance.

Accordingly, the gum component is preferably a combination of a kappa and iota carageenan gum, present in an amount of about 0.005 to about 0.2 percent by weight of the total whitening composition. A suitable weight-to-weight ratio of kappa to iota carageenan is about 10:1 to about 1:15.

Surprisingly, it was discovered that sodium caseinate provides good emulsion stability of the aseptic liquid coffee whiteners including TiO₂ when used in combination with the preferred stabilizing systems disclosed herein. It was also unpredictably found that the above described emulsion stabilizing system is optimum when used in combination with the preferred MCC/CMC/kappa and iota carrageenan system. Thus, a preferred embodiment of the invention includes an emulsifying component of sodium caseinate in combination with a low molecular weight emulsifier, with sodium caseinate present in an amount of about 0.1 to about 1.8 percent by weight of the composition and the low molecular weight emulsifier present in an amount of about 0.1 to about 1.0 percent by weight of the composition.

It was further surprisingly found that the use of the defined combinations of titanium dioxide, MCC and CMC, kappa-and iota-carrageenan, sodium caseinate and low molecular weight emulsifiers did not cause physico-chemical instability of UHT treated and aseptically filled liquid coffee whiteners, and did not affect the whitener viscosity during nine month storage at room temperature. The most stable liquid coffee whitener (no creaming, phase separation, sedimentation and viscosity changes during nine month storage at room temperature) was made using the unique stabilizing system comprising TiO₂, a combination of CMC and MCC, kappa-and iota-carrageenan, sodium caseinate and a combination of monoglycerides and esters of monoglycerides.

Therefore, in a particularly preferred embodiment, the emulsifying component is sodium caseinate and a combination of a monoglyceride and an acid ester of the monoglyceride, with sodium caseinate present in an amount of about 0.15 to about 0.3 percent by weight of the composition, and the combination of monoglyceride and acid ester of the monoglyceride is present in an amount of about 0.2 to about 0.6 percent by weight of the composition. The liquid whitening composition can further include a vegetable oil in an amount of about 0.5 to about 15 percent by weight of the composition, and/or sweetener in an amount of about 0.1 to about 50 percent by weight of the composition. In a preferred embodiment, the liquid whitening composition is low-fat or non-fat. Suitable compositions can have a total solid content between about 10 to about 65 percent by weight of the total composition. The stabilizing system can further include a pH buffer. The whiteners can also include added colors and/or flavors.

The invention further relates to a beverage made of water, a beverage-forming component and a sufficient amount of the whitening composition set forth herein to provide whitening to the beverage. The beverage forming component can be coffee, tea, chocolate or a fruit drink.

Embodiments of the invention are also directed to a process of preparing a shelf-stable liquid coffee whitener. The process includes providing a powdered form of the whitening agent and stabilizing system components of the whitening composition set forth herein, dissolving the powdered whitening agent and stabilizing components in hot (70 to 95C) water under agitation, adding a melted fat to the hot water to produce a mixture, sterilizing the mixture using ultra-high temperature (UHT) treatment, homogenizing the mixture, and cooling the mixture under aseptic conditions. Homogenization can be performed before or after UHT treatment, as desired.

Though the present invention discloses the coffee whiteners, use is not limited to coffee applications. For example, the whiteners can be also used for whitening of other beverages, such as tea or cocoa, or used with cereals, as cream for berries, creamers for soups, in many cooking applications, etc.

### DETAILED DESCRIPTION OF THE PREFERRED EMBODIMENTS

The present invention is directed to a shelf-stable liquid whitening composition (also referred to herein as a whitener or a creamer), formed by the interaction of a whitening component, oil/fats, proteins, carbohydrates and stabilized by the use of complex systems (also referred to herein as a stabilizing system) including combinations of gums and celluloses, an emulsifying system, and optional, a pH buffer.

The whitener includes a whitening component or agent such as an oxide that is suitable for human consumption in the provided amount. In preferred embodiments of the invention, the whitening agent is titanium oxide, present in an amount of about 0.1 to about 1 percent, and more preferably about 0.25 to about 0.65 percent by weight of the composition.

The aqueous media to which the whitener is added can be a beverage such as coffee, tea, a chocolate or cocoa-based drink, or a fruit-based drink. The beverage can be hot or cold, and can include natural and/or artificial flavors.

A stabilizing system is used to stabilize or maintain the whitener in a homogeneous state, such that there is no separation of components, sedimentation, creaming, feathering, gelation, or changes in viscosity. The stabilizing system maintains the whitener in a homogenous state in the composition at ambient temperatures for at least nine months. This enables the composition to be shelf stable during transport and storage prior to use. Ambient temperatures are typically room temperature and above, but include any environmental temperature at which the whitener is stored. The stabilizing system further helps maintain the whitener in the aqueous media to which the whitener added, such that the whitener exhibits the desired whitening and suspension qualities, and imparts the desired texture to achieve a palatable "mouth-feel".

The stabilizing system includes a gum component to help maintain the whitening agent in suspension, and also to help to maintain the whitener in an aqueous media or beverage to which the whitener is added. The gum component can be a combination of different gums selected from carrageenan gums, such as kappa, lambda or iota carrageenan. In a preferred embodiment the gum component is the combination of two different carrageenans in an amount from about 0.005 percent to about 0.2 percent by weight of the total composition of whitener. For instance, the gum component comprises kappa- and lambda-carrageenan, or kappa- and iota-carrageenan, or lambda- and iota-carrageenan, or kappa-, lambda- and iota-carrageenan. In a further preferred embodiment, the gum component is a combination of a kappa and iota carrageenan, with the kappa carrageenan being present in an amount of about 0.005 to about 0.05%, and the ratio of kappa to iota carrageenan is about 1:2 to about 1:6, in a weight ratio. Suitable examples include those sold under the trade name Seakem or Viscarin, available from FMC Corporation of Philadelphia, PA; Grinsted available from Danisco A/S of Denmark.

An emulsifier is present in the stabilizing system to maintain emulsion stability of the liquid whitener, and also to maintain the required whitener properties throughout aqueous media to which the whitener is added. The amount of emulsifier can range about 0.1 to about 3 weight percent of the total composition of whitener. The emulsifier can be a protein-based emulsifier, a low molecular weight emulsifier, or a combination. Suitable protein-based emulsifiers include, but are not limited to, casein, sodium caseinate, soy protein, whey protein, or a combination thereof. In a preferred embodiment of the invention, the protein-based emulsifier is sodium caseinate, present in an amount of about 0.1 to about 1.2 percent weight of the total composition.

Low molecular weight emulsifiers may include, but are not limited to, monoglycerides, diglycerides, acid esters of monoglycerides, sodium or calcium stearoyl lactylate, lecithin and enzyme modified lecithin, stearyl citrate, fatty acids and their salts, or diacetyl esters of monoglycerides, alone or in combination. The emulsifiers used are not limited to those of a single acyl or fatty acid component, such as on a specific carbon chain length or degree of unsaturation. In a preferred embodiment, the low-molecular weight emulsifier is a monoglyceride or an acid ester of a monoglyceride. In a particularly preferred embodiment, the low molecular weight emulsifier is a combination of one or more monoglycerides and acid esters of thereof. Suitable examples include those sold under the trade name Dimodan or Panodan, available from Danisco Ingredients USA, Inc. of New Century, Kansas, USA; Myverol or Admul available from Kerry Bio-Science Inc.

Low molecular weight emulsifiers can be present in an amount of about 0.1 to about 1.0 percent by weight of the total composition. In one preferred embodiment of the invention, the stabilizing system has about 0.15 to about 0.3 percent by weight of the composition of sodium caseinate and about 0.2 to about 0.6 percent by weight of the composition of monoglycerides and acid esters of monoglycerides. A whitener with these specifications displays superior stability and high whitening capability.

The stabilizing system further includes a cellulose component and gum component to stabilize suspension of the whitening agent and emulsifying component to stabilize provide emulsion stability to the whitening composition, including the cellulose and gum components. The emulsifying system or component also helps stabilize the whitening composition in an aqueous media to which the whitener is added.

The cellulose component is a blend of two different cellulose compounds. In a preferred embodiment of the invention the cellulose component includes a blend of microcrystalline cellulose (MCC) and carboxymethylcellulose (CMC), and is present in an amount of about 0.1 to about 1.0 percent by weight of the composition. Co-processed MCC and CMC may also be used. In other preferred embodiments, the MCC/CMC is present in an amount of about 0.2 to 0.6 percent by weight of the composition, and in a particularly preferred embodiment, the MCC/CMC blend is present in an about of about 0.3 to about 0.5 percent by weight of the composition. The weight to weight ratio of MCC to CMC can vary from about 3:1 to about 30:1, preferably from 8:1 to 12:1, and most preferably from 9:1 to 10:1. A ratio of less than 3:1 can cause a significant increase in TiO2 sedimentation, where a ratio above 30:1 can increase TiO2 sedimentation and co-precipitation of MCC.

It has been unexpectedly discovered that improved functionality is achieved when the stabilizing system includes the MCC/CMC blend, in the preferred ranges and ratios set forth above, in combination includes kappa and iota carrageenan, preferably in an amount of about 0.005 to about 0.1 percent by weight of the composition, and in a weight to weight range of 1:2 to 1:6 of kappa to iota carrageenan. Such combinations resulted in significantly improved stability of titanium dioxide in suspension. Stability is further improved when this MCC/CMC/kappa and iota carrageenan system includes an emulsifying component of sodium caseinate in an amount of about 0.15 to about 0.3 percent by weight of the composition, and a low molecular weight emulsifier in an amount of about 0.2 to about 0.6 percent by weight of the total composition. Superior stability is achieved when the low molecular weight emulsifier is a combination of monoglyceride and an acid ester of the monoglyceride.

MCC/CMC co-processed with carrageenan, such as kappa-, lambda- and iota-carrageenan, may also be used. Suitable examples of co-processed MCC/CMC/carrageenan include those sold under the trade name Avicel, available from FMC Corporation of Philadelphia, PA.

The whitener can also include a fat such as a vegetable oil in an amount of about 0.5 to about 15% by weight of the composition. The vegetable oil can have partially or wholly hydrogenated oils, alone or combination. Suitable vegetable oils include, but are not limited to, soybean oil, coconut oil, palm oil, cotton seed oil, canola oil, olive oil, sunflower oil, safflower oil, and combinations thereof.

In other embodiments, the whitener includes a sweetener in an amount of about 0.1 to about 50% by weight. The sweetener can be a natural sweetener such as sucrose, or a synthetic sweetener such as sucralose, or a combination thereof. In additional embodiments, the whitener includes a pH buffer. Preferably, the pH range is about 6 to 8 and more preferably about 6.5 to 7.5. Non-limiting examples of suitable buffers are salts such as potassium phosphate, sodium bicarbonate, sodium citrate, and sodium tripolyphosphate. The buffer can be present in an amount of about 0.5 to about 1% of the total weight of the composition.

The liquid whitener can have a total solid content between about 10 to 65%, preferably about 30-50%, and most preferably about 35-45% by weight of the total composition. When combined with an aqueous beverage such as coffee, the resulting liquid can have a solid content of from about 2 to 10%, preferably about 4-8%, and most preferably about 5-6% weight of the total composition.

Embodiments of the invention include fat-free, reduced-fat or low-fat, and full-fat products. Preferred embodiments are directed to full-fat, low-fat and non-fat whiteners, with a stabilizing system that can maintain the whitener in a homogenous state, without substantially compromising the qualities found in Extended Shelf Life (ESL) whiteners. ESL creamers generally keep for two months at refrigeration temperatures.

The liquid whitener, when combined with a beverage such as coffee, produces a beverage with an appealing, light color, good mouth-feel, body, smooth texture, and a pleasant taste with no off-flavors developed during shelf-life/storage. The whitener whitens or lightens liquid beverages by combining the whitener with the beverage at ratio of about 1:3 to 1:10, preferably about 1:5 to 1:7 ratio, and most preferably about 1:6.

Titanium dioxide was used as the whitening component in all exemplary formulations, with a particle size of about 0.4 microns. A particle size range of between 0.1 and 0.7 microns should be suitable depending upon the particular formulation. In a preferred embodiment, the particule size range is of between 0.3 and 0.5 microns. In the case of titanium dioxide, the optimum size of the whitening component is obtained when light scattering is delivering the most intense white color. This is related to the wavelength considered and for the whole visible spectrum the optimum size would be half the average wavelength or around 0.30 microns. It may be expected that a smaller size would make the liquid creamer itself bluish in color, whereas a larger size would progressively decrease the whitening power. Using a particle size around a mean of 0.30 microns should be beneficial at least on two accounts. The increased whitening power results in less of the whitening component needed for the same end color, which allows for a costs reduction. The smaller particles are easier to suspend and keep suspended. Generally speaking suspended particles are governed by the Stokes' law terminal velocity in term of gravitational force providing a tendency for settling. However at particle size lower than about 2.0 microns, other forces become significant and also control the settling or suspension. It is well known that below 2.0 microns Brownian motion predominates and the gravitational forces becomes less and less important as the size is reduced, thus favoring suspension of small particles without much settling(Basic Principles of Particle Size Analysis, Alan Rawle, Malvern Instruments Limited).

Exemplary whitener compositions prepared in accordance with embodiments of the invention were prepared and tested for stability over time. As a reference point, a commercially available, chilled ESL whitener was used. New formulations prepared in accordance with embodiments of the invention were tested against the reference product.

To ensure that the formulations were able to maintain physical stability over time at varying storage conditions, without gelation and fat separation, while maintaining good viscosity, the formulations were tested for whitening ability, visual appeal, pH, sedimentation, and viscosity. Analyses to assess the presence of these qualities included visual observation of the whitener, both before and after shaking. (Typically, some sediment is reabsorbed after shaking.) Whitening Capacity was determined using a Colorimeter (Model COLORQUEST™ XE™) to determine Color L, a, and b values of the whitener when added to coffee. A METROHM™ (model 632) was used to measure pH of the whiteners, and viscosity was analyzed by TA AR 1000N™ stress rheometer. The formulations were also observed by microscopy, using an Olympus BX51™ microscope. Finally, a value ranging from 1 to 10 was assigned for overall sensory evaluation.

The whitening capacity of the whitening formulations with all components within the preferred range after 3 weeks of storage at 38°C, after shaking, represented by L (lightness value display high whitening ability). The results also show a marked difference between the reference formulation and new formulations. The similar results of the whitening capacity were found for the formulations after 3 months of storage at 30°C, while the L value of the reference formulation decreased significantly. The whitening ability of the reference formulation was reduced due to the formation of compact sediment that could not be re-suspended in aqueous media, even after shaking. The improved whitening ability of the new formulations can be attributed to the ability to maintain titanium dioxide in suspension.

It also was found an improved whitening ability for the new formulations after 6 and 9 months storage at 20°C, reflected by the same amount of TiO₂ remaining in the sample. The reference formulation, however, showed a decreased whitening ability over time, due to sedimentation of TiO₂. These findings were also confirmed by measurements of L values of the reference and the new samples. It was determined that the new formulations prepared in accordance with embodiments of the present invention demonstrate superior whitening ability after extended storage at ambient temperature, when compared to the reference value.

Viscosity plays a significant role in particle suspension. Increasing product viscosity positively affected TiO₂ suspension. However, an increase in liquid viscosity alone is not sufficient to suspend titanium dioxide. While viscosity is an important factor, the formation of a network in the liquid to assist in suspension of particles is crucial. Moreover, viscosity of the whitener has an upper limit.

Thus, for good pouring ability of liquid whitener, viscosity upper limit of 60 cP at temperature of 4°C was established. Increasing product viscosity by the addition of stabilizers/stabilizing systems should lead to better suspension stability of TiO₂; however, it was unexpectedly found that product viscosity is not a main factor governing titanium dioxide suspension. For example, systems containing gellan gum, xanthan gum, guar gum or a combination thereof did not provide desirable TiO₂ suspension even at high viscosity (60 cP and higher). Moreover, using these gums with or without kappa or iota carrageenan did not improve TiO₂ suspension. Addition of these gums resulted in product gelation and/or phase separation (marbling/streaks) and also did not prevent creaming.

Embodiments of the invention are also directed to a beverage that includes water, a beverage-forming component, and a sufficient amount of the described whitener herein to provide whitening to the beverage. The beverage forming component can be coffee, tea, chocolate or a fruit drink. The beverage forming component can also be a natural or artificial flavoring component, such as powdered crystals or flavored syrup. The beverage itself can be hot, cold, or room temperature and can include natural and/or artificial flavors.

The present invention is further directed to a process of preparing the whiteners set forth herein. The process includes providing a powder form of the whitening agent and stabilizing system components of the whitening composition set forth herein, dissolving the whitening agent and stabilizing system components in hot (75 to 90C) water under agitation, adding a melted fat to the hot water to produce a mixture, sterilizing the mixture using a conventional ultra-high temperature (UHT) treatment; homogenizing the mixture before and/or after UHT treatment; and cooling the homogenized mixture under aseptic conditions. The method can further include filling aseptic containers under aseptic conditions with the homogenized combination.

As evidenced by the data provided above, formulations prepared in accordance with the present invention provide a shelf-stable liquid whitener that is homogeneous during the ambient storage for several months without phase separation, gelation and sedimentation. This is a significant improvement over existing whiteners, which must be kept at chilled temperatures. By producing a whitener that does not require refrigeration, transportation and storage costs are significantly reduced. The developed whiteners provide high whitening capacity, even at low-fat or fat-free levels, without the decrease in stability over the ambient storage.

The whiteners described herein maintain constant viscosity during storage at ambient temperatures. The whiteners are easily dispersible in coffee and are stable in hot and cold acidic environments without feathering, breaking emulsion or sedimentation. Also, when added to a beverage, the whitener provides a good mouth-feel, body, smooth texture, and also a good flavor with no off-taste developed during storage time.

### EXAMPLES

The invention is further defined by reference to the following illustrative, non-limiting examples.

### Example 1

3.5 kg of sucrose was mixed together with 33 g of kappa-carrageenan, 198 g of iota- carrageenan, and 1.98 kg of 10:1 MCC/CMC blend. The dry blend was added into 219 kg of hot water (65-70°C) under high agitation. 1.49 kg of disodium phosphate was added to the tank under continuous agitation.

3.5 kg of sucrose, 1.0 kg of titanium dioxide, 1.0 kg of sodium Caseinate, 20 g of colorant, and 1.0 kg of flavor were blended together. The dry blend was added to the tank of hot water with above stabilizers under agitation. After 5-10 minutes of mixing, 330 g of Dimodan and 1.0 kg of Panodan were added under continuous agitation. 8.0 kg of oil (melted at 55-60°C) was added under high agitation, followed by 83 kg of sucrose. The liquid was then UHT treated for 5 sec at 143°C, homogenized at 180/40 bar, cooled and the coffee whitener was aseptically filled into jars, jugs or pouches.

The product was stored during nine months at room temperature. No creaming, phase separation, gelation, sedimentation and practically no viscosity changes were found during the storage. Mouth-feel of coffee with added coffee whitener was judged by six non-trained panelists, which found the product having good mouth-feel, body, smooth texture, and a good flavor without altered flavor or an "off" taste.

### Example 2

A coffee whitener was prepared as in Example 1 but using CMC instead of MCC/CMC cellulose component.

The product was stored during 3 months at room temperature. Significant sediment formation was found in the coffee whitener samples during the storage. Further, when added to coffee, a significant decrease of whitening ability as compared to the fresh made coffee whitener was observed.

### Example 3

A coffee whitener was prepared as in Example 1 but using Xanthan gum instead of CMC and MCC.

The product was stored during 3 months at room temperature. Creaming, phase separation/ marbling, and gelation were found in the coffee whitener samples during the storage.

### Example 4

A coffee whitener was prepared as in Example 1 but using 3.0 kg of sodium caseinate and 30 kg of oil.

The product was stored during nine months at room temperature. No creaming, phase separation, gelation, sedimentation and practically no viscosity changes were found during the storage. Mouth-feel of coffee with added coffee whitener was judged by six non-trained panelists, which found the product having good mouth-feel, body, smooth texture, and a good flavor without altered flavor or an "off" taste.

## Claims

1. A shelf-stable, liquid whitening composition comprising titanium dioxide and a stabilizing system that includes:
a gum component in an amount sufficient to suspend the whitening agent both in the liquid whitening composition and in an aqueous media to which the liquid whitening composition is added;
an emulsifying component in an amount sufficient to maintain emulsion stability of the whitening composition and emulsion stability of the whitening composition in the aqueous media; and
a cellulose component including a blend of microcrystalline cellulose (MCC) and carboxymethylcellulose (CMC) in an amount of 0.1 to 1 percent by weight of the composition;
wherein the stabilizing system maintains the liquid whitening composition in a homogeneous state in the composition for at least 9 months at ambient temperatures,
and further wherein the stabilizing system provides for suspension and emulsion of the whitening composition in the aqueous media.

2. The liquid whitening composition according to claim 1, wherein the titanium dioxide is present in an amount of 0.05 to 1 percent by weight of the composition.

3. The liquid whitening composition according to claim 1 or 2, wherein the titanium dioxide has a particle size of 0.1 to 0.7 microns.

4. The liquid whitening composition according to any of claims 1 to 3, wherein the gum component is a mixture of kappa and iota carrageenan and is present in an amount of 0.005 to 0.2 percent by weight of the composition.

5. The liquid whitening composition of claim 4 wherein the weight to weight ratio of kappa to iota carrageenan is 10:1 to 1:15.

6. The liquid whitening composition according to any of claims 1 to 5, wherein the emulsifying component includes sodium caseinate in an amount of 0.1 to 1.8 percent by weight of the composition, and a low molecular weight emulsifier in an amount of 0.1 to 1.0 percent by weight of the composition.

7. The liquid whitening composition of claim 6, wherein the low molecular weight emulsifier is a combination of monoglyceride and acid ester of the monoglyceride, and the sodium caseinate is present in a preferred amount of 0.15 to 0.3 percent by weight of the composition.

8. The liquid whitening composition of any of the preceding claims, wherein the MCC and CMC are present in a weight ratio of 3:1 to 30:1.

9. The liquid whitening composition according to any of the preceding claims, further comprising a vegetable oil in an amount of 0.5 to 15 percent by weight of the composition.

10. The liquid whitening composition according to any of the preceding claims, further comprising a sweetener in an amount of 0.1 to 50 percent by weight of the composition.

11. The liquid whitening composition according to any of the preceding claims, wherein the whitener is low-fat or non-fat and which further includes a pH buffer.

12. The liquid whitening composition according to any of the preceding claims, wherein the composition has a total solids content between 10 to 65 percent by weight of the composition.

13. The liquid whitening composition according to any of the preceding claims, wherein:
the whitening agent is titanium dioxide having a particle size of 0.1 to 0.7 microns and is present in an amount of 0.05 to 1 percent by weight of the composition;
the gum component is a mixture of kappa and iota carrageenan and is present in an amount of 0.005 to 0.2 percent by weight of the composition, with the weight to weight ratio of kappa to iota carrageenan being 10:1 to 1:15;
the emulsifying component includes sodium caseinate in an amount of 0.1 to 1.8 percent by weight of the composition, and a low molecular weight emulsifier in an amount of 0.1 to 1.0 percent by weight of the composition, with the low molecular weight emulsifier being a combination of monoglyceride and acid ester of the monoglyceride; and the cellulose component is a blend of microcrystalline cellulose (MCC) and carboxymethylcellulose (CMC) and is present in an amount of 0.1 to 1 percent by weight of the composition., with the MCC and CMC being present in a weight ratio of 3:1 to 30:1.

14. The liquid whitening composition according to any of the preceding claims, wherein the gum component and the cellulose component are provided as a co-processed composition comprising said gum component and cellulose component.

15. A beverage comprising water, a beverage-forming component and a sufficient amount of the whitening composition according to any of the preceding claims to provide whitening to the beverage.

16. The beverage of claim 15 wherein the beverage forming component is coffee, tea, chocolate or a fruit drink.

17. A process of preparing the whitening composition according to any of the preceding claims comprising:
providing the whitening agent and stabilizing system components in powdered form;
dissolving the agent and components in hot water under agitation;
adding a melted fat to the hot water to produce a mixture;
sterilizing the mixture using ultra-high temperature (UHT) treatment;
homogenizing the mixture; and
cooling the mixture under aseptic conditions.

18. The process of claim 17, wherein homogenization occurs before UHT treatment, after UHT treatment, or before and after UHT treatment.

## Patentansprüche

1. Haltbare, flüssige Weißerzusammensetzung, die Titandioxid und ein Stabilisierungssystem umfasst, das Folgendes aufweist:
eine Gummikomponente in einer Menge, die ausreicht, um ein Weißungsmittel sowohl in der flüssigen Weißerzusammensetzung als auch in einem wässrigen Medium, dem die flüssige Weißerzusammensetzung zugesetzt wird, zu suspendieren;
eine Emulgierungskomponente in einer Menge, die ausreicht, um eine Emulsionsstabilität der Weißerzusammensetzung und eine Emulsionsstabilität der Weißerzusammensetzung in dem wässrigen Medium aufrechtzuerhalten; und
eine Cellulosekomponente, die eine Mischung aus mikrokristalliner Cellulose (MCC) und Carboxymethylcellulose (CMC) in einer Menge von 0,1 bis 1 Gewichtsprozent der Zusammensetzung enthält;
wobei das Stabilisierungssystem die flüssige Weißerzusammensetzung in der Zusammensetzung mindestens 9 Monate lang bei Umgebungstemperaturen in einem homogenen Zustand hält,
und wobei das Stabilisierungssystem ferner für eine Suspension und Emulsion der Weißerzusammensetzung in dem wässrigen Medium sorgt.

2. Flüssige Weißerzusammensetzung nach Anspruch 1, wobei das Titandioxid in einer Menge von 0,05 bis 1 Gewichtsprozent der Zusammensetzung vorliegt.

3. Flüssige Weißerzusammensetzung nach Anspruch 1 oder 2, wobei das Titandioxid eine Teilchengröße von 0,1 bis 0,7 Mikrometer aufweist.

4. Flüssige Weißerzusammensetzung nach einem der Ansprüche 1 bis 3, wobei die Gummikomponente eine Mischung aus kappa- und iota-Carrageenan ist und in einer Menge von 0,005 bis 0,2 Gewichtsprozent der Zusammensetzung vorliegt.

5. Flüssige Weißerzusammensetzung nach Anspruch 4, wobei das Gewicht-zu-Gewicht-Verhältnis von kappa- zu iota-Carrageenan 10:1 bis 1:15 beträgt.

6. Flüssige Weißerzusammensetzung nach einem der Ansprüche 1 bis 5, wobei die Emulgierungskomponente Natriumcaseinat in einer Menge von 0,1 bis 1,8 Gewichtsprozent der Zusammensetzung und einen niedermolekularen Emulgator in einer Menge von 0,1 bis 1,0 Gewichtsprozent der Zusammensetzung enthält.

7. Flüssige Weißerzusammensetzung nach Anspruch 6, wobei der niedermolekulare Emulgator eine Kombination aus Monoglycerid und einem Säureester des Monoglycerids ist und das Natriumcaseinat in einer bevorzugten Menge von 0,15 bis 0,3 Gewichtsprozent der Zusammensetzung vorliegt.

8. Flüssige Weißerzusammensetzung nach einem der vorstehenden Ansprüche, wobei MCC und CMC in einem Gewichtsverhältnis von 3:1 bis 30:1 vorliegen.

9. Flüssige Weißerzusammensetzung nach einem der vorstehenden Ansprüche, die ferner ein Pflanzenöl in einer Menge von 0,5 bis 15 Gewichtsprozent der Zusammensetzung umfasst.

10. Flüssige Weißerzusammensetzung nach einem der vorangehenden Ansprüche, die ferner ein Süßungsmittel in einer Menge von 0,1 bis 50 Gewichtsprozent der Zusammensetzung umfasst.

11. Flüssige Weißerzusammensetzung nach einem der vorangehenden Ansprüche, wobei der Weißmacher wenig Fett oder kein Fett enthält, und der ferner einen pH-Puffer enthält.

12. Flüssige Weißerzusammensetzung nach einem der vorangehenden Ansprüche, wobei die Zusammensetzung einen Gesamt-Feststoffgehalt zwischen 10 und 65 Gewichtsprozent der Zusammensetzung aufweist.

13. Flüssige Weißerzusammensetzung nach einem der vorstehenden Ansprüche, wobei:
das Weißungsmittel Titandioxid eine Teilchengröße von 0,1 bis 0,7 Mikrometer aufweist und in einer Menge von 0,05 bis 1 Gewichtsprozent der Zusammensetzung vorliegt;
die Gummikomponente eine Mischung aus kappa- und iota-Carrageenan ist und in einer Menge von 0,005 bis 0,2 Gewichtsprozent der Zusammensetzung vorliegt, wobei das Gewicht-zu-Gewicht-Verhältnis von kappa- zu iota-Carrageenan 10:1 bis 1:15 beträgt;
die Emulgierungskomponente Natriumcaseinat in einer Menge von 0,1 bis 1,8 Gewichtsprozent der Zusammensetzung und einen niedermolekularen Emulgator in einer Menge von 0,1 bis 1,0 Gewichtsprozent der Zusammensetzung enthält, wobei der niedermolekulare Emulgator eine Kombination aus Monoglycerid und Säureester des Monoglycerids ist; und die Cellulosekomponente eine Mischung aus mikrokristalliner Cellulose (MCC) und Carboxymethylcellulose (CMC) ist und in einer Menge von 0,1 bis 1 Gewichtsprozent der Zusammensetzung vorliegt, wobei MCC und CM in einem Gewichtsverhältnis von 3:1 bis 30:1 vorliegen.

14. Flüssige Weißerzusammensetzung nach einem der vorangehenden Ansprüche, wobei die Gummikomponente und die Cellulosekomponente als gemeinsam verarbeitete Zusammensetzung, welche die Gummikomponente und die Cellulosekomponente umfasst, bereitgestellt werden.

15. Getränk, das Wasser, eine getränkebildende Komponente und, in einer Menge, die ausreicht, um das Getränk hell zu färben, eine Weißerzusammensetzung nach einem der vorstehenden Ansprüche umfasst.

16. Getränk nach Anspruch 15, wobei die getränkebildende Komponente Kaffee, Tee, Schokolade oder ein Fruchtgetränk ist.

17. Verfahren zur Herstellung der Weißerzusammensetzung nach einem der vorangehenden Ansprüche, das Folgendes umfasst:
Bereitstellen des Weißungsmittels und der Stabilisierungssystemkomponenten in pulverisierter Form;
Auflösen des Mittels und der Komponenten in heißem Wasser unter Rühren;
Zugeben eines geschmolzenen Fettes zu dem heißen Wasser, um eine Mischung zu erzeugen;
Sterilisieren der Mischung unter Anwendung einer Uperisierungs- (UHT)-Behandlung;
Homogenisieren der Mischung und Kühlen der Mischung unter aseptischen Bedingungen.

18. Verfahren nach Anspruch 17, wobei die Homogenisierung vor der UHT-Behandlung, nach der UHT-Behandlung oder vor und nach der UHT-Behandlung stattfindet.

## Revendications

1. Composition blanchissante liquide à longue durée de conservation comprenant du dioxyde de titane et un système stabilisateur qui inclut :
un composant gomme en une quantité suffisante pour mettre en suspension l'agent blanchissant à la fois dans la composition blanchissante liquide et dans un milieu aqueux auquel la composition blanchissante liquide est ajoutée ;
un composant émulsifiant en une quantité suffisante pour maintenir la stabilité d'émulsion de la composition blanchissante et la stabilité d'émulsion de la composition blanchissante dans le milieu aqueux ; et
un composant cellulose incluant un mélange de cellulose microcristalline (MCC) et de carboxyméthylcellulose (CMC) en une quantité de 0,1 à 1 pour cent en poids de la composition ;
dans laquelle le système stabilisateur maintient la composition blanchissante liquide dans un état homogène dans la composition pendant au moins 9 mois à des températures ambiantes
et dans laquelle en outre le système stabilisateur assure une suspension et une émulsion de la composition blanchissante dans le milieu aqueux.

2. Composition blanchissante liquide selon la revendication 1, dans laquelle le dioxyde de titane est présent en une quantité de 0,05 à 1 pour cent en poids de la composition.

3. Composition blanchissante liquide selon la revendication 1 ou 2, dans laquelle le dioxyde de titane a une taille de particules de 0,1 à 0,7 micromètre.

4. Composition blanchissante liquide selon l'une quelconque des revendications 1 à 3, dans laquelle le composant gomme est un mélange de kappa et iota carraghénane et est présent en une quantité de 0,005 à 0,2 pour cent en poids de la composition.

5. Composition blanchissante liquide selon la revendication 4, dans laquelle le rapport pondéral de kappa sur iota carraghénane va de 10:1 à 1:15.

6. Composition blanchissante liquide selon l'une quelconque des revendications 1 à 5, dans laquelle le composant émulsifiant inclut du caséinate de sodium en une quantité de 0,1 à 1,8 pour cent en poids de la composition et un émulsifiant à faible masse moléculaire en une quantité de 0,1 à 1,0 pour cent en poids de la composition.

7. Composition blanchissante liquide selon la revendication 6, dans laquelle l'émulsifiant à faible masse moléculaire est une combinaison de monoglycéride et d'ester d'acide du monoglycéride et le caséinate de sodium est présent en une quantité préférée de 0,15 à 0,3 pour cent en poids de la composition.

8. Composition blanchissante liquide selon l'une quelconque des revendications précédentes, dans laquelle la MCC et la CMC sont présentes dans un rapport pondéral de 3:1 à 30:1.

9. Composition blanchissante liquide selon l'une quelconque des revendications précédentes, comprenant en outre une huile végétale en une quantité de 0,5 à 15 pour cent en poids de la composition.

10. Composition blanchissante liquide selon l'une quelconque des revendications précédentes, comprenant en outre un édulcorant en une quantité de 0,1 à 50 pour cent en poids de la composition.

11. Composition blanchissante liquide selon l'une quelconque des revendications précédentes, dans laquelle l'agent blanchissant est à faible teneur en matières grasses ou exempt de matières grasses et qui inclut en outre un tampon de pH.

12. Composition blanchissante liquide selon l'une quelconque des revendications précédentes, dans laquelle la composition a une teneur totale en solides comprise entre 10 et 65 pour cent en poids de la composition.

13. Composition blanchissante liquide selon l'une quelconque des revendications précédentes, dans laquelle :
l'agent blanchissant est du dioxyde de titane possédant une taille de particules de 0,1 à 0,7 micromètre et est présent en une quantité de 0,05 à 1 pour cent en poids de la composition ;
le composant gomme est un mélange de kappa et iota carraghénane et est présent en une quantité de 0,005 à 0,2 pour cent en poids de la composition, le rapport pondéral de kappa sur iota carraghénane allant de 10:1 à 1:15 ;
le composant émulsifiant inclut du caséinate de sodium en une quantité de 0,1 à 1,8 pour cent en poids de la composition et un émulsifiant à faible masse moléculaire en une quantité de 0,1 à 1,0 pour cent en poids de la composition, l'émulsifiant à faible masse moléculaire étant une combinaison de monoglycéride et d'ester d'acide du monoglycéride ; et le composant cellulose est un mélange de cellulose microcristalline (MCC) et de carboxyméthylcellulose (CMC) et est présent en une quantité de 0,1 à 1 pour cent en poids de la composition, la MCC et la CMC étant présentes dans un rapport pondéral de 3:1 à 30:1.

14. Composition blanchissante liquide selon l'une quelconque des revendications précédentes, dans laquelle le composant gomme et le composant cellulose sont fournis en tant que composition co-traitée comprenant lesdits composant gomme et composant cellulose.

15. Boisson comprenant de l'eau, un composant de formation de boisson et une quantité suffisante de la composition blanchissante selon l'une quelconque des revendications précédentes pour fournir un blanchissement à la boisson.

16. Boisson selon la revendication 15, dans laquelle le composant de formation de boisson est du café, du thé, du chocolat ou une boisson aux fruits.

17. Procédé de préparation de la composition blanchissante selon l'une quelconque des revendications précédentes, comprenant :
la fourniture de l'agent blanchissant et des composants du système stabilisateur sous forme de poudre ;
la dissolution de l'agent et des composants dans de l'eau chaude sous agitation ;
l'ajout d'une matière grasse fondue à l'eau chaude pour produire un mélange ;
la stérilisation du mélange en utilisant un traitement à ultra-haute température (UHT) ;
l'homogénéisation du mélange ; et le refroidissement du mélange dans des conditions aseptiques.

18. Procédé selon la revendication 17, dans lequel l'homogénéisation se produit avant le traitement UHT, après le traitement UHT ou avant et après le traitement UHT.
